# EUROPÄISCHE PATENTSCHRIFT

(11) **EP 2 940 324 B1**
(45) Veröffentlichungstag und Bekanntmachung des Hinweises auf die Patenterteilung: **02.08.2017**
(21) Anmeldenummer: 15164231.1
(22) Anmeldetag: 20.04.2015
(51) Int. Cl.: F16C 27/04, F16C 27/06, F01D 25/16, F16F 15/04, F16C 27/00

(54) **LAGERKÄFIG UND LAGEREINRICHTUNG MIT EINEM DERARTIGEN LAGERKÄFIG SOWIE VERFAHREN ZUM AUSBILDEN, REPARIEREN UND/ODER AUSTAUSCHEN EINES SOLCHEN LAGERKÄFIGS**
BEARING CAGE AND BEARING DEVICE HAVING SUCH A BEARING CAGE AND METHOD FOR PRODUCING, REPAIRING AND/OR REPLACING SUCH A BEARING CAGE
CAGE DE ROULEMENT ET DISPOSITIF DE ROULEMENT DOTÉ D'UNE TELLE CAGE DE ROULEMENT ET PROCÉDÉ DE FORMATION, DE RÉPARATION ET/OU DE CHANGEMENT D'UNE TELLE CAGE DE ROULEMENT

(30) Priorität: 29.04.2014 DE 102014208040
(43) Veröffentlichungstag der Anmeldung: 04.11.2015
(73) Patentinhaber: MTU Aero Engines AG, 80995 München (DE)
(72) Erfinder: Hiller, Sven-Jürgen, 85253 Erdweg (DE); Bayer, Erwin, 85221 Dachau (DE); Heß, Thomas, 81541 München (DE); Geiger, Peter, 80997 München (DE)

(56) Entgegenhaltungen:
- EP-A2- 1 630 357
- EP-A2- 2 149 681
- EP-A2- 2 682 207
- DE-A1-102006 049 216
- DE-A1-102011 086 775

## Beschreibung

Die vorliegende Erfindung betrifft einen Lagerkäfig und eine Lagereinrichtung mit einem solchen Lagerkäfig sowie ein Verfahren zum Ausbilden, Reparieren und/oder Austauschen eines derartigen Lagerkäfigs. Eine Lagereinrichtung mit einem derartigen Lagerkäfig wird insbesondere bei einem Verdichter oder einer Turbine eines Flugzeugtriebwerks oder einer stationären Gasturbine, beispielsweise einer Schiffsturbine oder Fahrzeugturbine, eingesetzt. Eine solche Lagereinrichtung ist z.B. aus der EP 1 630 357 bekannt. Im Allgemeinen werden bei Lagerungen, wie z.B. Kugel- oder Rollenlager, welche Lagerkäfige oder Federkäfige mit Federstäben aufweisen, die Lager- oder Federkäfige aus einem Stück herausgefräst. Dies hat jedoch den Nachteil, dass dies bei einem Lager- oder Federkäfig mit mehrfach gefalteten Federstäben nicht möglich ist. Stattdessen müssen in diesem Fall die Federstäbe als separate Teile befestigt werden, was einen solchen Lager- oder Federkäfig aufwendig und teuer macht.

Vor diesem Hintergrund liegt der Erfindung nun die Aufgabe zugrunde, einen verbesserten Lagerkäfig bereitzustellen.

Gemäß der Erfindung wird nun ein Lagerkäfig einer Lagereinrichtung, insbesondere eines Kugel- oder Rollenlagers, bereitgestellt, welcher mittels eines generativen Fertigungsverfahrens hergestellt ist und einen äußeren Flansch oder äußeren Ring und einen Lagersitz aufweist, welche über mehrere Federstäbe miteinander verbunden sind.

Der Lagerkäfig hat den Vorteil, dass durch die generative Fertigung des Lagerkäfigs auch mehrfach gefaltete Lagerkäfige aus einem Stück hergestellt werden können und nicht wie bisher aus Einzelteilen montiert werden müssen. Ein weiterer Vorteil ist, dass durch die generative Fertigung des Lagerkäfigs die Querschnitte, Querschnittsverläufe, Anzahl und Form der Federstäbe beliebig variiert werden kann, je nach Funktion und Einsatzzweck.

Die der vorliegenden Erfindung zugrunde liegende Erkenntnis/Idee besteht darin, einen Lagerkäfig mittels eines generativen Fertigungsverfahrens herzustellen und insbesondere die Federstäbe hierbei einteilig mit übrigen Teilen des Lagerkäfigs, wie z.B. einem äußeren Flansch oder Ring, einem Zwischenring, einem Lagersitz usw. auszubilden. Der Lagerkäfig weist einen ersten Zwischenring auf, der mit dem äußeren Flansch über erste Federstäbe einstückig verbunden ist. Der erste Zwischenring ist über zweite Federstäbe mit einem zweiten Zwischenring einstückig verbunden. Auf diese Weise kann eine Faltstruktur bei dem Lagerkäfig ausgebildet werden mit mehreren Reihen von Federstäben. Der zweite Zwischenring ist über dritte Federstäbe mit dem Lagersitz einstückig verbunden. Dadurch kann eine weitere Faltung des Lagersitzes erzielt werden. Ferner sind die zweiten Federstäbe zu den ersten Federstäben und/oder die dritten Federstäbe zu den zweiten Federstäben versetzt angeordnet. Die Federstäbe können dabei in Umfangsrichtung gleichmäßig oder ungleichmäßig versetzt zu den anderen zugeordneten Federstäben angeordnet sein. Beispielsweise können die Federstäbe in Umfangsrichtung in einer halben Teilung versetzt zu den anderen zugeordneten Federstäben angeordnet sein. Vorteilhafte Ausgestaltungen und Weiterbildungen der Erfindung ergeben sich aus den Unteransprüchen sowie der Beschreibung unter Bezugnahme auf die Zeichnungen.

Gemäß einer Ausführungsform der Erfindung ist der Lagersitz mit wenigstens einer Tasche ausgebildet, welche mit wenigstens einer Ölleitung verbunden ist zum Bereitstellen eines Ölfilms. Eine solche Tasche mit einer Ölleitung kann mittels eines generativen Fertigungsverfahrens sehr einfach und kostengünstig in dem Lagerkäfig ausgebildet werden.

In einer weiteren erfindungsgemäßen Ausführungsform ist die wenigstens eine Ölleitung in dem Lagersitz, wenigstens einem Federelement, wenigstens einem Zwischenring und/oder dem äußeren Flansch ausgebildet. Auf diese Weise kann der Verlauf der Ölleitung beliebig ausgebildet werden, je nach Funktion und Einsatzzweck. Die generative Fertigung des Lagerkäfigs erlaubt dabei eine große Gestaltungsfreiheit bei der Ausbildung und Integration der Ölleitung.

In einer anderen erfindungsgemäßen Ausführungsform ist in dem Lagersitz ein jeweiliges Lager, insbesondere ein Kugellager oder Rollenlager, aufnehmbar. Das Lager kann dabei außerdem z.B. durch eine Lagerfixierung in axialer Richtung fixiert werden.

Bei einem Flugtriebwerk kann das in dem erfindungsgemäßen Lagerkäfig aufgenommene Lager insbesondere dazu verwendet werden, um eine Welle zu lagern, die einen Turbinenabschnitt des Flugtriebwerks mit einem Verdichterabschnitt des Flugtriebwerks verbindet. Bei dieser Welle kann es sich zum Beispiel um eine Welle, etwa eine Hohlwelle, handeln, die eine Hochdruckturbine mit einem Hochdruckverdichter oder eine Niederdruckturbine mit einem Niederdruckverdichter verbindet. Der Lagerkäfig kann dabei Kräfte, die auf die Welle wirken, zum Beispiel wenn das Flugzeug in ein Luftloch sackt, abfedern.

In einer weiteren erfindungsgemäßen Ausführungsform ist der Lagerkäfig als ein ungefalteter Lagerkäfig mit nur einer Reihe von Federstäben ausgebildet. Alternativ kann der Lagerkäfig jedoch als ein mehrfach gefalteter Lagerkäfig ausgeführt werden bzw. sein. Ein mehrfach gefalteter Lagerkäfig weist gegenüber einem ungefalteten Lagerkäfig den Vorteil auf, dass bei einer Auslenkung des Lagers relativ zu den Strukturbauteilen, an denen der Lagerkäfig befestigt ist, die Symmetrieachse des Lagers achsparallel zur Rotationsachse bleibt, so dass eine im Lager gelagerte Welle keine Krümmung erfährt.

Gemäß einer anderen erfindungsgemäßen Ausführungsform weist wenigstens ein Federstab einen konstanten Querschnitt oder einen variierenden Querschnitt auf. Je nach aufzunehmender Belastung kann so der Federstab gezielt eingestellt werden und mittels des generativen Fertigungsverfahrens einfach realisiert werden. Insbesondere kann durch eine entsprechende Querschnittsgestaltung, wobei sich der Querschnitt vorzugsweise über die Länge des Federstabs verändert, eine nicht-lineare Federcharakteristik des Federstabs gezielt definiert. Dies lässt sich besonders einfach mittels eines generativen Verfahrens realisieren.

Zudem kann durch eine außermittige Fertigung von dem Flansch und/oder dem Lagersitz zu einem den Lagerkäfig umgebenen Gehäuse (Stator) das Gewicht der Welle (Rotor) so kompensiert werden, dass der Rotor und der Stator trotz Eigengewicht des Rotors, welches auf die Federstäbe des Lagerkäfigs nach unten drückt, konzentrisch zueinander angeordnet sind.

In einer weiteren erfindungsgemäßen Ausführungsform weisen die ersten, zweiten und/oder dritten Federstäbe die gleiche Länge und/oder den gleichen Querschnitt auf oder eine unterschiedliche Länge und/oder einen unterschiedlichen Querschnitt auf.

Vorteilhafter Weise ist zwischen zwei benachbarten Bauteilabschnitten des Lagerkäfigs, welche über wenigstens einen der Federstäbe derart miteinander verbunden sind, dass sie relativ zueinander beweglich sind, wenigstens ein Anschlagelement angeordnet. Vorzugsweise sind mehrere Anschlagelemente vorgesehen, insbesondere wenigstens vier Anschlagelement. Diese Anschlagelemente können integral mit einem der beiden Bauteilabschnitten ausgebildet sein, insbesondere durch generative Fertigung. Das wenigstens eine Anschlagelement dient dazu, ein unerwünschten Kontakt zwischen Rotor und Stator an anderer Stelle zu vermeiden oder zumindest zu reduzieren. Insbesondere, wenn der erfindungsgemäße Lagerkäfig zur Lagerung einer Welle in einem Flugtriebwerk verwendet wird, kann durch das wenigstens eine Anschlagelement verhindert werden, dass bei besonderen Belastungen, wie zum Beispiel einem besonders harten Aufsetzen bei der Landung oder besonders starken Turbulenzen im Flug, die Rotorblätter zu stark mit dem Anstreifbelag eines den Rotor in Kontakt gelangen.

Vorzugsweise liegt dabei eine Anschlagfläche des wenigstens einen Anschlagelements einer Gegenanschlagfläche eines der beiden Bauteilabschnitte gegen, wobei eine Oberflächenkontur der Anschlagfläche komplementär zu einer Oberflächenkontur der Gegenanschlagfläche ausgebildet ist. Ist der eine Bauteilabschnitt zum Beispiel der ringförmig ausgebildete Flansch des Lagerkäfigs und der andere Bauteilabschnitt der zweite Zwischenring des Lagerkäfigs, und ist das Anschlagelement an dem zweiten Zwischenring zwischen dem zweiten Zwischenring und dem Flansch angeordnet, so kann eine freie Oberfläche bzw. die Anschlagfläche des Anschlagelements vorzugsweise dieselbe bogenförmige Krümmung aufweisen, wie die ihr gegenüberliegende Gegenanschlagfläche des ringförmigen Flansches.

Ausgesprochen vorteilhaft ist es, wenn das wenigstens eine Anschlagelement derart ausgebildet ist, dass es ab einer definierten Lasteinwirkung auf das wenigstens eine Anschlagelement zu einer Deformation des Anschlagelements kommt. Die Deformation kann dabei elastisch und/oder plastisch sein. Hierdurch kann das wenigstens eine Anschlagelement kurzfristig gezielt Stoßenergie absorbieren, so dass sich diese nicht oder nur vermindert auf die rotierende Welle übertragen kann. Dies ist zum Beispiel bei einer Bruchlandung eines Flugzeugs, in dessen Flugtriebwerken der erfindungsgemäße Lagerkäfig zur Lagerung einer Rotorwelle vorgesehen ist, von besonderem Interesse.

Hierzu kann das wenigstens eine Anschlagelement in einem mittleren Bereich zwischen seinen beiden Endabschnitten, welche jeweils einem der beiden Bauteilabschnitten zugewandt bzw. zugeordnet sind, strukturell weniger steif ausgebildet sein, als an den Endabschnitten. Beispielsweise kann es in diesem mittleren Bereich porös ausgebildet sein oder eine Wabenstruktur aufweisen, wohingegen es in seinen Endabschnitten als Vollmaterial ausgebildet sein kann.

Ist das wenigstens eine Anschlagelement dabei derart ausgebildet ist, dass nach einer plastischen Deformation, insbesondere einem Bruch, in dem mittleren Bereich zwischen den beiden Endabschnitten des Anschlagelements die beiden Endabschnitte noch formschlüssig miteinander verbunden sind, so kann verhindert werden, dass sich zumindest größere Einzelteile des Anschlagelements von dem Rest des Anschlagelements lösen und somit andernorts Schaden anrichten können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachfolgend anhand der in den schematischen Figuren der Zeichnungen angegebenen Ausführungsbeispiele näher erläutert. Es zeigen:
Fig. 1 eine Schnittansicht eines gefalteten Lagerkäfigs gemäß einer ersten Ausführungsform der Erfindung;
Fig. 2 die Draufsicht des Lagerkäfigs gemäß Fig. 1;
Fig. 3 eine Schnittansicht eines gefalteten Lagerkäfigs gemäß einer zweiten Ausführungsform der Erfindung;
Fig. 4 ein Ablaufdiagramm zum Herstellen eines gefalteten Lagerkäfigs gemäß einer Ausführungsform der Erfindung; und
Fig. 5a-5d verschiedene Ausführungsformen von Anschlagelementen, die dazu ausgelegt sind, zwischen benachbarten Bauteilabschnitten des erfindungsgemäßen Lagerkäfigs verbaut zu werden, um die maximale Relativbewegung zwischen diesen Bauteilabschnitten zu begrenzen.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

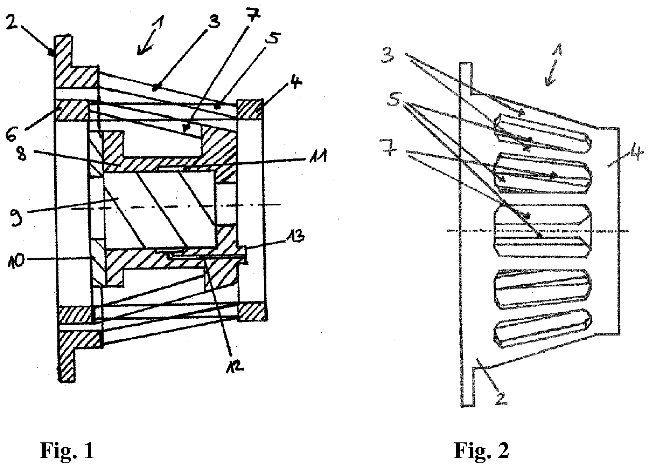

In Fig. 1 ist eine Schnittansicht eines gefalteten Lagerkäfigs 1 gemäß einer ersten Ausführungsform der Erfindung gezeigt.

Bei Turbomaschinen werden die Lager oft mit sog. Lagerkäfigen (engl. squirrel cages) versehen. Ein solcher Lagerkäfig ermöglicht eine definierte Steifigkeit einer Gehäusestruktur. Bisherige Lagerkäfige bestehen aus einem äußeren Ring oder einem äußeren Flansch, der mit einem umgebenden Gehäuse verbunden ist. Über Federstäbe ist dieser äußere Ring mit einem inneren Ring verbunden, an welchem dann direkt oder indirekt beispielsweise ein Kugel- oder Rollenlager befestigt ist. Die Steifigkeit des Lagerkäfigs wird unter anderem vor allem durch die Anzahl, die Querschnitte und die Länge dieser Federstäbe bestimmt. Dabei werden diese Federstäbe bisher klassischerweise durch Ausfräsen aus einem integralen Bauteil hergestellt. Hierdurch werden jedoch die Form und der Abstand der Federstäbe begrenzt.

Teilweise ist die erforderliche Länge solcher Federstäbe sehr groß. In diesem Fall verwendet man einen sog. gefalteten Federkäfig. Anstatt die Federstäbe in eine Richtung zu führen, teilt man sie und führt sie radial weiter innen wieder zurück. Dies erfordert jedoch ein neues Bauteil mit Verschraubungen, da mit klassischem Fräsen ein gefalteter Käfig nicht aus einem Bauteil herstellbar ist. Dies erhöht jedoch das Gewicht, die Anzahl an Passsitzen, die Anzahl an notwendige Toleranzen und dem entsprechend die Herstellungskosten.

Gemäß der Erfindung wird daher ein Lager- oder Federkäfig 1, insbesondere ein gefalteter Lager- oder Federkäfig 1, mittels eines generativen Fertigungsverfahrens hergestellt. Der Lager- oder Federkäfig 1 kann dabei für eine Lagerung bei einem Triebwerk, einer stationären Gasturbine, einer Fahrzeuggasturbine, einer Schiffgasturbine usw. eingesetzt werden.

Durch das generative Fertigungsverfahren ist es möglich, einen, wie in Fig. 1 gezeigten mehrfach, beispielsweise dreifach, gefalteten Lager- oder Federkäfig 1 (engl. squirrel cage) als ein Bauteil herzustellen. Im Nachfolgenden wird die durchgehend der Begriff Lagerkäfig verwendet, wobei die Begriff auch durch Federkäfig entsprechend ersetzt werden kann.

Wie in der Schnittansicht der ersten Ausführungsform eines erfindungsgemäßen Lagerkäfigs 1 gezeigt ist, weist der Lagerkäfig 1 einen äußeren Flansch 2 auf. An dem äußeren Flansch 2 ist eine erste Reihe von ersten Federstäben 3 angeordnet. Die ersten Federstäbe 3 sind wiederum mit einem umlaufenden ersten Zwischenring 4 des Lagerkäfigs 1 verbunden. An dem ersten Zwischenring 4 ist, vorzugsweise an gleicher Stelle oder auf der gleichen Seite, eine zweite oder mittlere Reihe von zweiten Federstäben 5 ausgebildet. Die zweiten Federstäbe 5 der zweiten Reihe sind dabei beispielsweise in Umfangsrichtung versetzt zu den ersten Federstäben 3 der ersten Reihe des äußeren Flansches 2 angeordnet. Hierbei können die zweiten Federstäbe 5 beispielsweise in Umfangrichtung um eine halbe Teilung versetzt zu den ersten Federstäben 4 angeordnet sein.

Die zweiten Federstäbe 5 der zweiten oder mittleren Reihe sind mit einem zweiten weiteren Zwischenring 6 verbunden. An dem zweiten Zwischenring 6 ist, vorzugsweise an gleicher Stelle oder auf der gleichen Seite, eine dritte oder innere Reihe von dritten Federstäben 7 ausgebildet. Die dritten Federstäbe 7 können dabei beispielsweise in Umfangsrichtung versetzt zu den zweiten Federstäben 5 der zweiten Reihe angeordnet sein. Dabei können die dritten Federstäbe 7 beispielsweise in Umfangrichtung um eine halbe Teilung versetzt zu den zweiten Federstäben 5 angeordnet sein. Die dritten Federstäbe 7 der dritten oder inneren Reihe sind mit einem Lagersitz 8 verbunden. In diesem Lagersitz 8 ist das eigentliche Lager 9 angeordnet. Das Lager 9 ist hierbei beispielsweise ein Kugellager oder Rollenlager usw., und kann mit einer Lagerfixierung 10 axial fixiert werden, wie in dem Ausführungsbeispiel in Fig. 1 illustriert ist. Die Lagerfixierung 10 kann dabei als ein von dem restlichen Lagerkäfig 1 separat ausgebildetes Bauteil gefertigt sein, welches nach der Einführung des Lagers 9 in den Lagersitz 8 mit dem restlichen Lagerkäfig 1 verbunden, zum Beispiel verschraubt, wird, um das Lager 9 axial zu fixieren bzw. zu sichern.

Wie in dem Ausführungsbeispiel in Fig. 1 gezeigt ist kann in dem Lagersitz 8 wenigstens eine Tasche 11 zum Bereitstellen eines Ölfilms (engl. squeeze-film) vorgesehen sein. Das zugeführte Öl kann insbesondere zur Schmierung und/oder Kühlung der Wälzkörper in dem Lager 9 verwendet werden. Zur Ölversorgung der Tasche zum Ausbilden des Ölfilms kann beispielsweise wenigstens eine Leitung 12 in dem Lagersitz 8 ausgebildet werden mit einem Anschluss 13 für die Ölversorgung.

Der Lagerkäfig 1 mit dem äußeren Flansch 2, den ersten, zweiten und dritten Federstäben 3, 5, 7, dem ersten und zweiten Zwischenring 4, 6 und dem Lagersitz 9 wird gemäß der Erfindung vorzugsweise als ein Teil mittels eines generativen Fertigungsverfahrens hergestellt. Mittels des generativen Fertigungsverfahrens kann dabei auch wenigstens eine jeweilige Tasche 11 zur Bereitstellung eines Ölfilms, sowie wenigstens eine Ölleitung 12 zum Zuführen von Öl zu der Tasche 11 mit einem Ölanschluss 13 in dem Lagersitz 8 ausgebildet werden.

Zu generativen Fertigungsverfahren mit denen ein Lagerkäfig 1 gemäß der Erfindung hergestellt werden kann, gehören beispielsweise das sog. Rapid Prototyping und das sog. Rapid Manufacturing. Bei der generativen Fertigung werden Bauteile insbesondere durch einen schichtweisen Materialauftrag aufgebaut. Zu den generativen Fertigungsverfahren gehört beispielsweise das Lasersintern, das Selective Laser Sintering (SLS), das Elektronenstrahlsintern, das Electron Beam Melting (EBM), das LaserCusing, das Selective Laser Melting (SLM) oder das 3D-Printing usw.. Dabei wird der hinzuzufügende oder aufzutragende Werkstoff in Pulverform verarbeitet, beispielsweise ein Pulver aus Metall oder einer Metalllegierung. Das Pulver wird hierbei z.B. schichtweise auf eine Grundplatte oder einen Träger aufgetragen. Anschließend wird die Pulverschicht in einem Bauteilbereich zum Ausbilden des Bauteils mittels einer Energiestrahlung verfestigt, wie z.B. eines Laserstrahls und/oder Elektronenstrahls. Anschließend wird über dieser Pulverschicht die nächste Pulverschicht aufgetragen und mittels Energiestrahlung wiederum selektiv verfestigt. Auf diese Weise kann Schicht für Schicht das Bauteil aufgebaut werden. Die Verfestigung der jeweiligen Pulverschicht erfolgt dabei normalerweise auf Basis von Geometriedaten, z.B. CAD-Daten, des herzustellenden Bauteils. Außerdem kann die Verfestigung des Pulvers mittels Energiestrahlung ohne Abschirmung oder abgeschirmt, z.B. in einer Schutzgas- oder Edelgasatmosphäre, oder im Vakuum, erfolgen. Der Bereich der Pulverschicht kann beispielsweise abgescannt und der Bauteilbereich der Pulverschicht mittels Energiestrahlung verfestigt werden. Durch Einwirken der Energiestrahlung wird das Pulver in diesem Bereich gesintert oder aufgeschmolzen und hierdurch verfestigt.

In Fig. 2 ist eine schematische und stark vereinfachte Draufsicht auf den Lagerkäfig 1 gemäß Fig. 1 gezeigt. Der Lagerkäfig 1 weist dabei den äußeren Flansch 2 auf, an welchem die ersten oder äußeren Federstäbe 3 ausgebildet und mit dem ersten Zwischenring 4 verbunden sind. An dem ersten Zwischenring 4 sind dabei an derselben Stelle oder auf derselben Seite die zweiten oder mittleren Federstäbe 5 ausgebildet und mit dem zweiten Zwischenring 6 verbunden. Wie in dem Ausführungsbeispiel in Fig. 2 illustriert ist, sind die zweiten Federstäbe 5 in Umfangsrichtung zu den ersten Federstäben 3 versetzt angeordnet, beispielsweise um eine halbe Teilung. An dem zweiten Zwischenring 6 sind dabei an derselben Stelle oder auf derselben Seite die dritten oder inneren Federstäbe 7 ausgebildet und mit dem Lagersitz verbunden. Die dritten Federstäbe 7 können dabei ebenfalls in Umfangrichtung, beispielsweise um eine halbe Teilung, versetzt zu den zweiten Federstäben 5 angeordnet sein. Die dritten Federstäbe 7 sind mit dem Lagersitz verbunden, in welchem das eigentliche Lager angeordnet ist. Das Lager ist hierbei, wie zuvor beschrieben, z.B. ein Kugellager oder Rollenlager usw., und kann mit der Lagerfixierung axial fixiert werden.

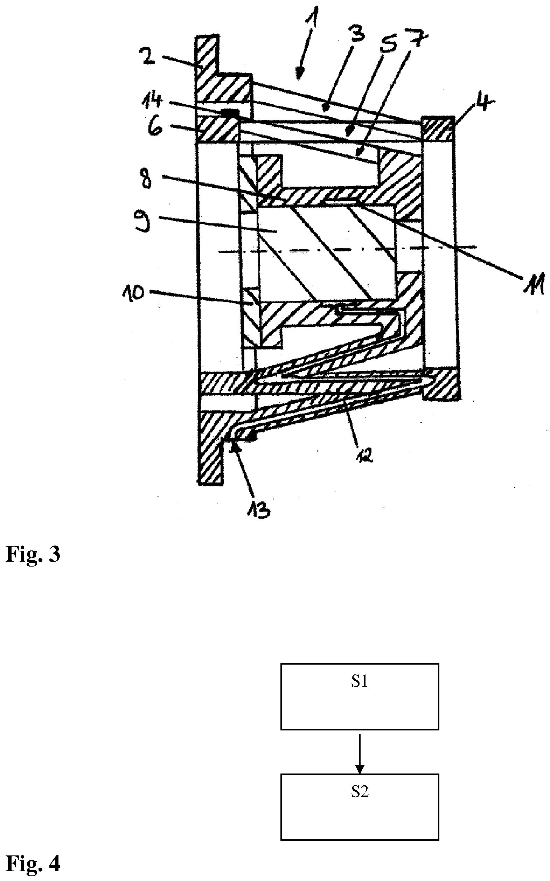

Weiter ist in Fig. 3 eine Schnittansicht eines gefalteten Lagerkäfigs 1 gemäß einer zweiten Ausführungsform der Erfindung gezeigt.

Der gefaltete Lagerkäfig 1 gemäß der zweiten Ausführungsform der Erfindung weist im Wesentlichen denselben Aufbau auf, wie der Lagerkäfig gemäß der ersten Ausführungsform.

Der gefaltete Lagerkäfig 1 gemäß der zweiten Ausführungsform der Erfindung unterscheidet sich dabei von dem gefalteten Lagerkäfig gemäß der ersten Ausführungsform zum einen dadurch, dass die wenigstens eine Ölleitung 12 für den Ölfilm gleich mit in den Federstäben integriert ist. Die Ölleitung 12 kann dabei wie auch immer gewünscht nach außen geführt werden. Zum anderen ist bei der zweiten Ausführungsform ein Anschlagelement 14 gezeigt.

Wie in der Schnittansicht der zweiten Ausführungsform eines erfindungsgemäßen Lagerkäfigs 1 in Fig. 3 gezeigt ist, weist der Lagerkäfig 1 einen äußeren Flansch 2 auf. An dem äußeren Flansch 2 ist hierbei eine erste Reihe von ersten oder äußeren Federstäben 3 angeordnet. Die ersten Federstäbe 3 sind wiederum mit einem umlaufenden ersten Zwischenring 4 des Lagerkäfigs 1 verbunden, wobei an dem ersten Zwischenring 4, vorzugsweise an gleicher Stelle oder auf der gleichen Seite, eine zweite oder mittlere Reihe von zweiten Federstäben 5 ausgebildet ist. Hierbei sind die zweiten Federstäbe 5 der zweiten Reihe beispielsweise in Umfangsrichtung versetzt zu den ersten Federstäben 3 der ersten Reihe des äußeren Flansches 2 angeordnet. Die zweiten Federstäbe 5 können dabei beispielsweise in Umfangrichtung um eine halbe Teilung versetzt zu den ersten Federstäben 3 angeordnet sein.

Des Weiteren sind die zweiten Federstäbe 5 der zweiten oder mittleren Reihe mit einem zweiten weiteren Zwischenring 6 verbunden. An dem zweiten Zwischenring 6 ist, vorzugsweise an gleicher Stelle oder auf der gleichen Seite, eine dritte oder innere Reihe von dritten Federstäben 7 ausgebildet. Dabei können die dritten Federstäbe 7 beispielsweise in Umfangsrichtung versetzt zu den zweiten Federstäben 5 der zweiten Reihe angeordnet sein. Beispielsweise können die dritten Federstäbe 7 in Umfangrichtung um eine halbe Teilung versetzt zu den zweiten Federstäben 5 angeordnet sein. Die dritten Federstäbe 7 der dritten oder inneren Reihe sind mit einem Lagersitz 8 verbunden, in welchem jeweils das eigentliche Lager 9 angeordnet ist, beispielsweise ein Kugellager oder Rollenlager usw.. Das Lager 9 kann dabei zum Beispiel mit einer Lagerfixierung 10 axial fixiert werden, wie in dem Ausführungsbeispiel in Fig. 3 illustriert ist.

Wie in dem Ausführungsbeispiel in Fig. 3 gezeigt ist, kann in dem Lagersitz 8 wenigstens eine Tasche 11 zum Bereitstellen eines Ölfilms (engl. squeeze-film) vorgesehen sein. Um die Tasche 11 mit Öl zu versorgen und einen Ölfilm auszubilden, kann in dem Lagersitz 8 und z.B. wenigstens einem dritten Federstab 7 wenigstens eine Ölleitung 12 ausgebildet sein mit einem Anschluss für die Ölversorgung 13. Wie in dem Ausführungsbeispiel in Fig. 3 gezeigt ist, ist in einem dritten, zweiten und ersten Federstab 7, 5, 3 die wenigstens eine Ölleitung 12 ausgebildet und mit einem Ölanschluss 13 versehen. Die wenigstens eine Ölleitung 12 wird dabei über den ersten Federstab 3 nach außen geführt und mit einem Ölanschluss 13 zum Anschließen einer entsprechenden Ölquelle versehen.

Die wenigstens eine Ölleitung 12 kann beliebig in den Federstäben 3, 5, 7 integriert und nach außen geführt werden. Beispielsweise kann die Ölleitung 12 in wenigstens einem dritten und zweiten Federstab 7, 5 integriert oder ausgebildet sein und z.B. über den zweiten Federstab 5 nach außen geführt werden. Ebenso kann die Ölleitung 12 auch nur in wenigstens einem dritten Federstab 7 ausgebildet sein und von diesem aus nach außen geführt werden, z.B. über den zweiten Zwischenring 6. Die Ölleitung 12 kann beliebig in wenigstens einem ersten Federstab 3, einem zweiten Federstab 5, einem dritten Federstab 7, dem ersten Zwischenring 4, dem zweiten Zwischenring 6, dem äußeren Flansch 2 und/oder dem Lagersitz 8 ausgebildet oder integriert sein.

Wie die erste Ausführungsform des erfindungsgemäßen Lagerkäfigs ist auch die zweite Ausführungsform des erfindungsgemäßen Lagerkäfigs 1 durch ein generatives Fertigungsverfahren hergestellt. Wie zuvor beschrieben, wird der Lagerkäfig 1 mit dem äußeren Flansch 2, den ersten, zweiten und dritten Federstäben 3, 5, 7, dem ersten und zweiten Zwischenring 4, 6 und dem Lagersitz 8 gemäß der Erfindung vorzugsweise als ein Teil mittels eines generativen Fertigungsverfahrens hergestellt. Mittels des generativen Fertigungsverfahrens kann dabei auch die jeweilige wenigstens eine Tasche 11 zur Bereitstellung eines Ölfilms, sowie die wenigstens eine Ölleitung 12 zum Zuführen von Öl zu der Tasche mit einem Ölanschluss 13 in dem Lagerkäfig 1 ausgebildet werden. Außerdem kann auch die Lagerfixierung 10 mittels eines generativen Fertigungsverfahrens hergestellt werden. Das gilt für alle Ausführungsformen der Erfindung.

Durch das Herstellen des Federkäfigs, insbesondere gefalteten Federkäfigs, mittels eines generativen Fertigungsverfahrens erreicht man radial und in Baulänge eine sehr große Kompaktheit. Die Federstäbe können gegenüber einer konventionellen Fertigung in Bezug auf Querschnitt, Querschnittsverlauf, Anzahl und/oder Form in einem sehr weiten Bereich dimensioniert werden. Durch die integrale Herstellung werden Verbindungselemente und damit Gewicht, Bauvolumen, Toleranzen und entsprechend Kosten eingespart.

Darüber hinaus ist bei der zweiten Ausführungsform des erfindungsgemäßen Lagerkäfigs 1 zwischen der radial inneren Seite des Flansches 2 und der radial äußeren Seite des zweiten Zwischenrings 6 wenigstens ein Anschlagelement 14 vorgesehen. Dieses ist in dem vorliegenden Beispiel an dem zweiten Zwischenring 6 angebracht und vorzugsweise integral mit diesem ausgebildet. Es könnte alternativ aber genauso auch an dem Flansch 2 angebracht sein. Vorzugsweise sind mehrere, zum Beispiel mindestens vier, Anschlagelemente 14 in Umfangsrichtung verteilt zwischen dem Flansch 2 und dem zweiten Zwischenring 6 angeordnet, auch wenn in Figur 3 nur ein Anschlagelement 14 beispielhaft dargestellt ist. Die Anschlagelemente 14 begrenzen gezielt den maximalen Weg, den dar zweite Zwischenring 6 relativ zu dem Flansch 2 zurücklegen kann. Dies ist zum Beispiel besonders vorteilhaft, wenn der erfindungsgemäße Lagerkäfig zur Lagerung einer Welle in einem Flugtriebwerk verwendet wird, um zu verhindern, dass Rotorblätter zu stark in Kontakt mit einem Einlaufbelag einer die Rotorblätter umgebenden Statoranordnung gelangen. Dabei ist die freie Oberfläche des Anschlagelements 14, welche dem Flansch 2 zugewandt ist und welche hier auch als Anschlagfläche bezeichnet wird, komplementär zu einer ihr gegenüberliegenden Gegenanschlagfläche des Flansches 2 ausgebildet. Dies bedeutet der in Fig. 3 dargestellten Ausführungsform, dass die Anschlagfläche und die Gegenanschlagfläche insbesondere im Wesentlichen dieselbe Krümmung aufweisen. So kommt es bei einer Berührung von Anschlagelement 14 und Flansch 2 zu einem Flächenkontakt und nicht nur zu einem punkt- oder linienförmigen Kontakt.

Im Falle einer übermäßig starken Lasteinwirkung auf die Maschine, zum Beispiel ein Flugtriebwerk, welche den erfindungsgemäßen Lagerkäfig aufweist, ist es vorteilhaft, wenn wenigstens ein Anschlagelement 14, derart ausgebildet ist, dass es sich gezielt plastisch und/oder elastisch verformen kann, um zumindest einen Teil der Energie der Lasteinwirkung zu absorbieren. Dies ist beispielsweise bei einer Bruchlandung eines Flugzeugs mit einem zuvor erwähnten Flugtriebwerk von Vorteil.

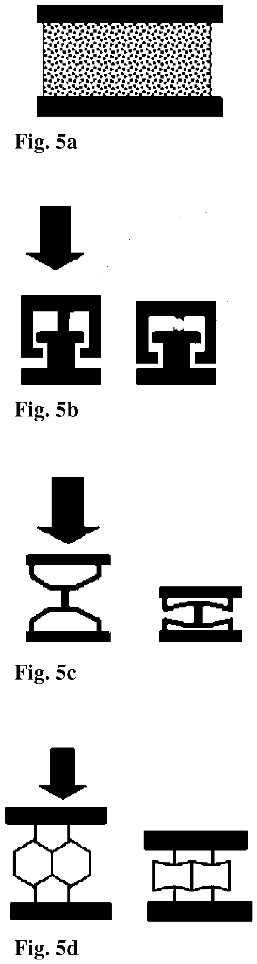

Verschiedene vorteilhafte Strukturen von möglichen Anschlagelementen 14 sind im Querschnitt schematisch in den Fig. 5a-5d dargestellt. Diese haben alle gemeinsam, dass sie in ihrem mittleren Bereich eine strukturell geringere Steifigkeit aufweisen als im Bereich ihrer Endabschnitte (jeweils oben und unten in den Fig. 5a-5d). Somit kommt es zu einer gezielten Verformung bzw. zum gezielten Versagen dem mittleren Bereich, wenn eine entsprechend große Kraft (angedeutet durch die senkrechten Pfeile in den Fig. 5b-5d) auf das jeweilige Anschlagelement 14 wirkt.

Bei dem Ausführungsbeispiel gemäß Fig. 5a besteht das Anschlagelement 14 im Wesentlichen aus zwei in radialer Richtung voneinander beabstandeten Platten, wobei die radial innere Platte (unten in Fig. 5a) im Wesentlichen dieselbe Krümmung aufweist wie die radial äußere Oberfläche des zweiten Zwischenrings 6, mit der sie verbunden ist, und die radial äußere Platte (oben in Fig. 5a) bzw. die Anschlagfläche im Wesentlichen dieselbe Krümmung aufweist wie die radial innere Oberfläche bzw. die Gegenanschlagfläche des Flansches 2. Zwischen diesen beiden Platten ist ein poröser Abschnitt vorgesehen, welcher vorzugsweise zusammen mit den beiden Platten, und weiter bevorzugt auch zusammen mit dem restlichen Lagerkäfig 1, generativ hergestellt ist.

Fig. 5b zeigt eine alternative Struktur eines Anschlagelements 14, welche sich insbesondere dadurch auszeichnet, dass bei einer Verformung bzw. einem Bruch des mittleren Bereichs des Anschlagelements 14 die beiden Endabschnitte weiterhin durch Formschluss miteinander verbunden bleiben. Somit gelangen keine größeren, losen Bauteilstücke des Anschlagelements 14 bei dessen Versagen in die zugehörige Maschine, zum Beispiel in ein Flugtriebwerk.

Die Fig. 5c und 5d zeigen zwei weitere alternative Ausführungsformen eines Anschlagelements, wobei sich diese Ausführungsformen besonders dadurch auszeichnen, dass jeweils in dem mittleren Bereich zwischen den beiden Endabschnitten des Anschlagelements 14 eine wabenartige Struktur vorgesehen ist. Wie in den Figuren angedeutet, kann sich diese bei entsprechender Krafteinwirkung gezielt (plastisch) verformen, um somit kurzfristig Stoßenergie zu absorbieren.

In Fig. 4 ist ein Ablaufdiagramm zur Herstellung eines Lagerkäfigs gemäß der Erfindung gezeigt.

In einem ersten Schritt S1 wird mittels des generativen Fertigungsverfahrens der erfindungsgemäße Lagerkäfig aufgebaut. Zum Fertigen des Lagerkäfigs wird eine Pulverschicht auf einen Träger oder eine Grundplatte aufgebracht und der Bauteilbereich der Pulverschicht mittels Energiestrahlung, wie z.B. einem Laserstrahl oder Elektronenstrahl, einer Energiestrahlungsquelle aufgeschmolzen und verfestigt. Der Bauteilbereich umfasst dabei den Lagerkäfig, wie er beispielsweise zuvor mit Bezug auf die Fig. 1 bis 3 beschrieben wurde. Die Grundplatte wird um eine Schichtdicke verfahren und die nächste Pulverschicht auf die zuletzt verfestigte Pulverschicht aufgebracht und die neue Pulverschicht in ihrem Bauteilbereich durch die Energiestrahlung der Energiestrahlungsquelle verfestigt. Der Schritt S1 wird solange wiederholt bis der Lagerkäfig vollständig aus den verfestigten Bauteilbereichen hergestellt ist. Alternativ kann auch Laserpulverauftragsschweißen oder ein anderes generatives Verfahren zur Herstellung des Lagerkäfigs herangezogen werden.

Im Anschluss daran wird in einem Schritt S2 das nicht verfestigte Pulver entfernt. Der Lagerkäfig kann direkt genutzt werden, um zu einer Lagereinrichtung zusammengebaut zu werden mit den entsprechenden Lagern, wie Kugellager oder Rollenlager usw., die in dem jeweiligen Lagersitz des Lagerkäfigs aufgenommen werden. Ebenso kann der Lagerkäfig je nach Funktion und Einsatzzweck auch nachbearbeitet oder nachbehandelt werden.

Der erfindungsgemäße Lagerkäfig kann aus Metall oder einer Metalllegierung oder je nach Funktion und Einsatzzweck auch aus Kunststoff oder einem anderen geeigneten Material oder Materialkombination durch ein generatives Fertigungsverfahren hergestellt werden.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Insbesondere sind die zuvor beschriebenen Ausführungsbeispiele miteinander kombinierbar, insbesondere einzelne Merkmale davon.

Insbesondere ist die Erfindung nicht auf einen gefalteten Lagerkäfig beschränkt. Es kann ebenso gemäß der Erfindung auch ein Lagerkäfig mit nur einer Reihe von Federstäben vorgesehen werden, die beispielsweise einen Flansch mit einem Lagersitz verbinden. Ebenso kann der Lagerkäfig statt, wie zuvor in den Fig. 1 bis 3 gezeigt, eine dreifache Faltung auch ein zweifache Faltung oder eine mehr als dreifache Faltung aufweisen, beispielsweise eine vierfache Faltung usw..

### Bezugszeichenliste

- 1: Lager- oder Federkäfig
- 2: äußerer Flansch
- 3: erster Federstab
- 4: erster Zwischenring
- 5: zweiter Federstab
- 6: zweiter Zwischenring
- 7: dritter Federstab
- 8: Lagersitz
- 9: Lager
- 10: Lagerfixierung
- 11: Tasche
- 12: Leitung
- 13: Anschluss
- 14: Anschlagelement

## Patentansprüche

1. Lagerkäfig (1) einer Lagereinrichtung, insbesondere eines Kugel- oder Rollenlager, welcher einen äußeren Flansch (2) und einen Lagersitz (8) aufweist, welche über mehrere Federstäbe (3, 5, 7) miteinander verbunden sind, **dadurch gekennzeichnet, dass** der Lagerkäfig (1) mittels eines generativen Fertigungsverfahrens hergestellt ist sowie dass der Lagerkäfig (1) einen ersten Zwischenring (4) aufweist, der mit dem äußeren Flansch (2) über erste Federstäbe (3) verbunden ist, und
dass der erste Zwischenring (4) über zweite Federstäbe (5) mit einem zweiten Zwischenring (6) verbunden ist,
dass der zweite Zwischenring (6) über dritte Federstäbe (7) mit dem Lagersitz (8) verbunden ist und
dass die zweiten Federstäbe (5) zu den ersten Federstäben (3) und/oder die dritten Federstäbe (7) zu den zweiten Federstäbe (5) versetzt angeordnet sind.

2. Lagerkäfig nach Anspruch 1, **dadurch gekennzeichnet, dass** der Lagersitz (8) mit wenigstens einer Tasche (11) ausgebildet ist, welche mit wenigstens einer Ölleitung (12) zum Bereitstellen eines Ölfilms verbunden ist.

3. Lagerkäfig nach Anspruch 2, **dadurch gekennzeichnet, dass** die wenigstens eine Ölleitung (12) in dem Lagersitz (8), in wenigstens einem Federstab 3, 5, 7), in wenigstens einem Zwischenring (4, 6) und/oder in dem äußeren Flansch (2) verlaufend ausgebildet ist.

4. Lagerkäfig nach wenigstens einem der vorhergehenden Ansprüche, **dadurch gekennzeichnet, dass** in dem Lagersitz (8) ein Lager (9), insbesondere ein Kugellager oder Rollenlager, aufnehmbar und das Lager (9) vorzugsweise durch eine Lagerfixierung (10) in axialer Richtung fixiert ist.

5. Lagerkäfig nach wenigstens einem der vorhergehenden Ansprüche, **dadurch gekennzeichnet, dass** der Lagerkäfig (1) als ein mehrfach gefalteter Lagerkäfig (1) ausgebildet ist.

6. Lagerkäfig nach wenigstens einem der vorhergehenden Ansprüche, **dadurch gekennzeichnet, dass** wenigstens ein Federstab (3, 5, 7), vorzugsweise alle Federstäbe (3, 5, 7), einen konstanten Querschnitt aufweist bzw. aufweisen.

7. Lagerkäfig nach wenigstens einem der vorhergehenden Ansprüche, dadurch gekenntzeichnet, dass wenigstens ein Federstab (3, 5, 7), vorzugsweise alle Federstäbe (3, 5, 7) einen variierenden Querschnitt aufweist bzw. aufweisen, so dass der wenigstens eine Federstab (3, 5, 7) eine gezielt eingestellte, nicht-lineare Federcharakteristik besitzt.

8. Lagerkäfig nach wenigstens einem der vorhergehenden Ansprüche, **dadurch gekennzeichnet, dass** die ersten, zweiten und/oder dritten Federstäbe (3, 5, 7) die gleiche Länge und/oder den gleichen Querschnitt oder eine unterschiedliche Länge und/oder einen unterschiedlichen Querschnitt aufweisen.

9. Lagerkäfig nach wenigstens einem der vorhergehenden Ansprüche, **dadurch gekennzeichnet, dass** zwischen zwei benachbarten Bauteilabschnitten (2, 6) des Lagerkäfigs (1), welche über wenigstens einen der Federstäbe (3, 5) derart miteinander verbunden sind, dass sie relativ zueinander beweglich sind, wenigstens ein, vorzugsweise wenigstens vier, Anschlagelement(e) (14) angeordnet ist bzw. sind, welche(s) vorzugsweise integral mit einem der beiden Bauteilabschnitten (6) ausgebildet ist bzw. sind.

10. Lagerkäfig nach Anspruch 9, **dadurch gekennzeichnet, dass** eine Anschlagfläche des wenigstens einen Anschlagelements (14) einer Gegenanschlagfläche eines der beiden Bauteilabschnitte (2, 6) gegenüberliegt, wobei eine Oberflächenkontur der Anschlagfläche komplementär zu einer Oberflächenkontur der Gegenanschlagfläche ausgebildet ist.

11. Lagerkäfig nach Anspruch 9 oder 10, **dadurch gekennzeichnet, dass** das wenigstens eine Anschlagelement (14) derart ausgebildet ist, dass es ab einer definierten Lasteinwirkung auf das wenigstens eine Anschlagelement (14) zu einer Deformation des Anschlagelements (14) kommt.

12. Lagerkäfig nach Anspruch 11, **dadurch gekennzeichnet, dass** das wenigstens eine Anschlagelement (14) in einem mittleren Bereich zwischen seinen beiden Endabschnitten, welche jeweils einem der beiden Bauteilabschnitten (2, 6) zugewandt bzw. zugeordnet sind, strukturell weniger steif ausgebildet ist, als an den Endabschnitten.

13. Lagerkäfig nach Anspruch 12, **dadurch gekennzeichnet, dass** das wenigstens eine Anschlagelement (14) derart ausgebildet ist, dass nach einer plastischen Deformation, insbesondere einem Bruch, in dem mittleren Bereich zwischen den beiden Endabschnitten des Anschlagelements (14) die beiden Endabschnitte noch formschlüssig miteinander verbunden sind.

14. Lagereinrichtung mit einem Lagerkäfig (1), welcher gemäß einem der Ansprüche 1 bis 13 ausgebildet ist.

15. Flugtriebwerk mit einer Lagereinrichtung nach Anspruch 14, wobei die Lagereinrichtung vorzugsweise eine Welle lagert, welche einen Turbinenbereich mit einem Verdichterbereich des Flugtriebwerks verbindet.

16. Verfahren zum Ausbilden, Reparieren und/oder Austauschen eines Lagerkäfigs einer Lagereinrichtung nach Anspruch 14, welcher einen äußeren Flansch (2) und einen Lagersitz (8) aufweist, welche über mehrere Federstäbe (3, 5, 7) miteinander verbunden sind, wobei das Verfahren die Schritte aufweist:
Auftragen einer mittels Energiestrahlung verfestigbaren Pulverschicht auf einen Träger;
Verfestigen der Pulverschicht mittels Energiestrahlung einer Energiestrahlungsquelle in einem Bauteilbereich der Pulverschicht, wobei der Bauteilbereich der Lagerkäfigbereich ist;
Verfahren des Trägers um eine Schichtdicke und Auftragen einer nächsten Pulverschicht;
Verfestigen der Pulverschicht mittels Energiestrahlung der Energiestrahlungsquelle in dem Bauteilbereich der Pulverschicht; und
Wiederholen der vorangehenden Schritte bis der fertige Lagerkäfig aus den verfestigten Bauteilbereichen aufgebaut ist.

## Claims

1. A bearing cage (1) of bearing device, in particular a ball bearing or roller bearing, the bearing cage comprising an outer flange (2) and a bearing seat (8), which are joined together via a plurality of spring beams (3, 5, 7), **characterized in that** the bearing cage (1) is produced by means of a a generative manufacturing method, and that the bearing cage (1) comprises a first intermediate ring (4) joined to the outer flange (2) via first spring beams (3), and
that the first intermediate ring (4) is joined to a second intermediate ring (6) via second spring beams (5),
that the second intermediate ring (6) is joined to the bearing seat (8) via third spring beams (7), and
that the second spring beams (5) are arranged offset with respect to the first spring beams (3) and/or the third spring beams (7) are arranged offset with respect to the second spring beams (5).

2. The bearing cage according to claim 1, **characterized in that** the bearing seat (8) is formed with at least one pocket (11), which is connected to at least one oil line (12) for supplying an oil film.

3. The bearing cage according to claim 2, **characterized in that** the at least one oil line (12) is formed so as to run in the bearing seat (8), in at least one spring beam (3, 5, 7), in at least one intermediate ring (4, 6) and/or in the outer flange (2).

4. The bearing cage according to at least one of the preceding claims, **characterized in that** a bearing (9), in particular a ball bearing or a roller bearing, can be received in the bearing seat (8) and the bearing (9) is fixed in place in axial direction preferably by means of a bearing fixation element (10).

5. The bearing cage according to at least one of the preceding claims, **characterized in that** the bearing cage (1) is designed as a multi-folded bearing cage (1),

6. The bearing cage according to at least one of the preceding claims, **characterized in that** at least one spring beam (3, 5, 7), and preferably all spring beams (3, 5, 7), has or have a constant cross section.

7. The bearing cage according to at least one of the preceding claims, **characterized in that** at least one spring beam (3, 5, 7), and preferably all spring beams (3, 5, 7), has or have a varying cross section, so that the at least one spring beam (3, 5, 7) has a specifically adjusted, nonlinear spring characteristic.

8. The bearing cage according to at least one of the preceding claims, **characterized in that** the first, second and/or third ones of the spring beams (3, 5, 7) have the same length and/or the same cross section or a different length and/or a different cross section.

9. The bearing cage according to at least one of the preceding claims, **characterized in that** at least one, and preferably at least four, stop element(s) (14) is or are arranged between two adjacent component sections (2, 6) of the bearing cage (1) that are joined together via at least one of the spring beams (3, 5) such that they can move relative to each other, the stop element(s) preferably being formed integrally with one of the two component sections (6).

10. The bearing cage according to claim 9, **characterized in that** a stop surface of the at least one stop element (14) lies opposite a counter stop surface of one of the two component sections (2, 6), wherein a surface contour of the stop surface is designed complementary to a surface contour of the counter stop surface.

11. The bearing cage according to claim 9 or 10, **characterized in that** the at least one stop element (14) is designed such that a deformation of the stop element (14) occurs starting at a defined load acting on the at least one stop element (14).

12. The bearing cage according to claim 11, **characterized in that** the at least one stop element (14) is designed to be less rigid in a middle region between its two end sections, each of which faces or is assigned to one of the two component sections (2, 6), than at the end sections.

13. The bearing cage according to claim 12, **characterized in that** the at least one stop element (14) is designed such that, after a plastic deformation, in particular a fracture, in the middle region between the two end sections of the stop element (14), the two end sections are still joined together in a form-fitting manner.

14. A bearing device having a bearing cage (1) designed according to any one of claims 1 to 13.

15. An aircraft engine having a bearing device according to claim 14. the bearing device preferably bearing a shaft joining a turbine region to a compressor region of the aircraft engine.

16. A method for designing, repairing and/or replacing a bearing cage of a bearing device according to claim 14, the bearing cage comprising an outer flange (2) and a bearing seat (8), which are joined together via a plurality of spring beams (3, 5, 7), the method comprising the steps of:
applying a powder layer, which can be solidified by means of radiated energy, onto a support;
solidifying the powder layer by means of radiated energy from a source of radiated energy in a component region of the powder layer, the component region being the bearing cage region;
moving the support by one layer thickness and applying a next powder layer;
solidifying the powder layer by means of radiated energy from the source of radiated energy in the component region of the powder layer; and
repeating the preceding steps until the finished bearing cage has been constructed from the solidified component regions.

## Revendications

1. Cage de roulement (1) d'un dispositif de roulement, en particulier d'un roulement à billes ou d'un roulement à rouleaux , qui présente une bride externe (2) et un siège de roulement (8), qui sont reliés l'une à l'autre via plusieurs barres à ressort (3, 5, 7), **caractérisée en ce que** la cage de roulement (1) est fabriquée au moyen d'un procédé de fabrication par génération, **en ce que** la cage de roulement (1) présente un premier anneau intermédiaire (4) qui est relié à la bride externe (2) via des premières barres à ressort (3), et
**en ce que** le premier anneau intermédiaire (4) est relié à un deuxième anneau intermédiaire (6) via des deuxièmes barres à ressort (5),
**en ce que** le deuxième anneau intermédiaire (6) est relié au siège de roulement (8) via des troisièmes barres à ressort (7) et
**en ce que** les deuxièmes barres à ressort (5) sont agencées décalées des premières barres à ressort (3) et/ou les troisièmes barres à ressort (7) des deuxièmes barres à ressort (5).

2. Cage de roulement selon la revendication 1, **caractérisée en ce que** le siège de roulement (8) est formé avec au moins une poche (11) qui est reliée à au moins un conduit d'huile (12) pour former un film d'huile.

3. Cage de roulement selon la revendication 2, **caractérisée en ce que** le au moins un conduit d'huile (12) est conçu de manière à circuler dans le siège de roulement (8), dans au moins une barre à ressort (3, 5, 7), dans au moins un anneau intermédiaire (4, 6) et/ou dans la bride externe (2).

4. Cage de roulement selon au moins l'une des revendications précédentes, **caractérisée en ce qu'**un roulement (9), en particulier un roulement à billes ou un roulement à rouleaux, peut être reçu dans le siège de roulement (8) et le roulement (9) est de préférence fixé par une fixation de roulement (10) dans la direction axiale.

5. Cage de roulement selon au moins l'une des revendications précédentes, **caractérisée en ce que** la cage de roulement (1) se présente sous la forme d'une cage de roulement (1) à replis multiples.

6. Cage de roulement selon au moins l'une des revendications précédentes, **caractérisée en ce qu'**au moins une barre à ressort (3, 5, 7), de préférence toutes les barres à ressort (3, 5, 7), présente(nt) une section transversale constante.

7. Cage de roulement selon au moins l'une des revendications précédentes, **caractérisée en ce qu'**au moins une barre à ressort (3, 5, 7), de préférence toutes les barres à ressort (3, 5, 7), présente(nt) une section transversale variable de sorte que la au moins une barre à ressort (3, 5, 7) possède une caractéristique de ressort non linéaire réglée à dessein.

8. Cage de roulement selon au moins l'une des revendications précédentes, **caractérisée en ce que** les première, deuxième et/ou troisième barres à ressort (3, 5, 7) présentent la même longueur et/ou la même section transversale ou une longueur différente et/ou une section transversale différente.

9. Cage de roulement selon au moins l'une des revendications précédentes, **caractérisée en ce qu'**au moins un, de préférence au moins quatre éléments de butée (14) est ou sont agencés entre deux sections constituantes voisines (2, 6) de la cage de roulement (1) qui sont reliées l'une à l'autre via au moins l'une des barres à ressort (3, 5) de sorte qu'elles soient mobiles l'une par rapport à l'autre, le(s)quel(s) élément) de butée est ou sont formés de préférence d'un seul tenant avec l'une des deux sections constituantes (6).

10. Cage de roulement selon la revendication 9, **caractérisée en ce qu'**une surface de butée du au moins un élément de butée (14) est opposée à une contre-surface de butée de l'une des deux sections constituantes (2, 6), dans laquelle un contour de surface de la surface de butée est formée de manière complémentaire à un contour de surface de la contre-surface de butée.

11. Cage de roulement selon la revendication 9 ou 10, **caractérisée en ce que** le au moins un élément de butée (14) est conçu en sorte de provoquer une déformation de l'élément de butée (14) sous l'effet d'une charge définie sur le au moins un élément de butée (14).

12. Cage de roulement selon la revendication 11, **caractérisée en ce que** le au moins un élément de butée (14) est conçu de manière structurellement moins rigide que sur les sections d'extrémité dans une zone centrale entre ses deux sections d'extrémité, qui sont tournées vers ou affectées à respectivement l'une des deux sections constituantes (2, 6).

13. Cage de roulement selon la revendication 12, **caractérisée en ce que** le au moins un élément de butée (14) est conçu de manière que, après une déformation plastique, en particulier une rupture, dans la zone centrale entre les deux sections d'extrémité de l'élément de butée (14), les deux sections d'extrémité soient encore reliées à l'une à l'autre de manière mécanique.

14. Dispositif de roulement comprenant une cage de roulement (1) qui est conçue selon l'une quelconque des revendications 1 à 13.

15. Groupe motopropulseur ayant un dispositif de roulement selon la revendication 14, dans lequel le dispositif de roulement reçoit de préférence un arbre qui relie une zone de turbine à une zone de compresseur du groupe motopropulseur.

16. Procédé de formation, de réparation et/ou d'échange d'une cage de roulement d'un dispositif de roulement selon la revendication 14, qui présente une bride externe (2) et un siège de roulement (8), qui sont reliés l'un à l'autre via plusieurs barres à ressort (3, 5, 7), dans lequel le procédé présente les étapes consistant à :
appliquer sur un support une couche de poudre durcissable au moyen d'un rayonnement énergétique ;
durcir la couche de poudre au moyen du rayonnement énergétique d'une source de rayonnement énergétique dans une zone constituante de la couche de poudre, dans lequel la zone constituante est la zone de la cage de roulement ;
déplacer le support d'une épaisseur de couche et appliquer une couche de poudre suivante ;
durcir la couche de poudre au moyen du rayonnement énergétique de la source de rayonnement énergétique dans la zone constituante de la couche de poudre ; et
répéter les étapes précédentes jusqu'à ce que la cage de roulement finie soit formée à partir des zones constituantes durcies.
